# EUROPEAN PATENT APPLICATION

(11) **EP 4 357 863 A1**
(43) Date of publication of application: **24.04.2024**
(21) Application number: 22824983.5
(22) Date of filing: 14.06.2022
(51) Int. Cl.: G05B 19/418, G06Q 50/04, G06F 16/84

(54) **DATA COLLECTION SYSTEM AND REMOTE CONTROL SYSTEM**

(30) Priority: 14.06.2021 JP 2021099000; 19.10.2021 JP 2021171134
(71) Applicant: Kabushiki Kaisha Toshiba, Tokyo 105-0023 (JP); Toshiba Digital Solutions Corporation, Kawasaki-shi, Kanagawa 212-0013 (JP)
(72) Inventor: INATA, Minoru, Kawasaki-shi, Kanagawa 212-0013 (JP); SHIMANOUCHI, Mamoru, Kawasaki-shi, Kanagawa 212-0013 (JP); KAMO, Takayasu, Kawasaki-shi, Kanagawa 212-0013 (JP); YAMAMOTO, Teruya, Kawasaki-shi, Kanagawa 212-0013 (JP); TAKESHITA, Satoko, Kawasaki-shi, Kanagawa 212-0013 (JP); HAGIMORI, Shou, Kawasaki-shi, Kanagawa 212-0013 (JP)
(74) Representative: Marks & Clerk LLP
(86) International application number: PCT/JP2022/023726
(87) International publication number: WO 2022/264995

(57) **Abstract**

The present invention aims to provide a data collection system which collects semi-structured data and stores the semi-structured data to a database.

According to an embodiment, a data collection system comprises receiving means for receiving semi-structured data including first data of a first level and a plurality of second data of a second level, the first data including a plurality of the second data, wherein a plurality of second identification information are respectively set for a plurality of the second data, a database, information storage means for storing storage position information indicating storage positions of a plurality of the second identification information in the database, and registration means for writing a plurality of the second data to the database based on the storage position information.

## Description

### Technical Field

An embodiment of the present invention relates to a data collection system and a remote control system.

### Background Art

There are remote control systems that remotely control facilities and equipment in factories and plants. A remote control system includes a data collection system that collects data on the facilities and equipment to be controlled. The data collection system includes a database that stores the collected data. The remote control system controls the control target based on the data stored in the database of the data collection system. For example, the data collection system collects data relating to an operating status of the control target. When the remote control system detects that the operating status of the control target is abnormal, it remotely controls the control target.

Facilities and equipment in factories and plants may include those manufactured by different manufacturers. Facilities and equipment manufactured by different manufacturers may output data in different formats. There are proposals to unify the format of data output from control targets so that data collection systems can collect different formats of data output from control targets of different manufacturers. One example of a proposal is asset administration shell (AAS) data, which is being standardized in Industrie 4.0. AAS data is semi-structured data.

A database of a data collection system is often a database unique to that business. Therefore, the names of the data element fields of the AAS data, which is semi-structured data, and the names of the fields in the database may not match, and the data collection system may not be able to store the semi-structured data in the database.

### Citation List

### Patent Literatures

Patent Literature 1: JP 6162821 B
Patent Literature 2: JP 6577546 B
Patent Literature 3: JP 2020-57089 A

### Non Patent Literature

Non Patent Literature 1: SPECIFICATION Details of the Asset Administration Shell, Part 1, Federal Ministry for Economic Affairs and Energy (BMWi), November 2020

### Disclosure of Invention

### Technical Problem

The present invention aims to provide a data collection system and a remote control system which collect semi-structured data and store the semi-structured data to a database.

### Solution to Problem

According to an embodiment, a data collection system comprises receiving means for receiving semi-structured data including first data of a first level and a plurality of second data of a second level, the first data including a plurality of the second data, wherein a plurality of second identification information are respectively set for a plurality of the second data; a database; information storage means for storing storage position information indicating storage positions of a plurality of the second identification information in the database; and registration means for writing a plurality of the second data to the database based on the storage position information.

### Brief Description of Drawings

FIG. 1 shows an example of a remote control system according to a first embodiment.
FIG. 2 shows an example of data representation of AAS data.
FIG. 3 shows a detailed example of data representation of the AAS data.
FIG. 4 shows another example of data representation of the AAS data.
FIG. 5 is a flowchart showing an example of a mapping processor.
FIG. 6 shows an example of an object extraction.
FIG. 7 shows an example of a parent-child relationship dictionary.
FIG. 8A shows an example of a registration buffer.
FIG. 8B shows an example of the registration buffer.
FIG. 8C shows an example of the registration buffer.
FIG. 8D shows an example of the registration buffer.
FIG. 9 shows an example of AASID acquisition.
FIG. 10 shows an example of a sub-model mapping.
FIG. 11 shows another example of the sub-model mapping.
FIG. 12 shows still another example of the sub-model mapping.
FIG. 13 shows an example of a data registration to an asset DB.
FIG. 14 shows another example of the data registration to the asset DB.
FIG. 15 shows an example of updating the parent-child relationship dictionary.
FIG. 16 shows an example of a remote control system according to a second embodiment.
FIG. 17A shows an example of a registration buffer.
FIG. 17B shows an example of the registration buffer.
FIG. 18 shows an example of a sub-model mapping.
FIG. 19 shows another example of the sub-model mapping.

### Mode for Carrying Out the Invention

Embodiments will be described below with reference to the accompanying drawings. The following description is intended to exemplify devices and methods to embody the technical ideas of the embodiments, and the technical ideas of the embodiments are not limited to the structure, shape, arrangement, material, etc., of the components described below. Modifications readily conceivable by those skilled in the art are naturally included in the scope of the disclosure. For the sake of clarity of explanation, in the drawings, the size, thickness, planar dimension, shape, etc., of each element may be changed from the actual embodiment and schematically expressed. In multiple drawings, elements that have different dimensional relationships or ratios to each other may be included. In multiple drawings, corresponding elements may be denoted by same reference numerals and duplicate explanations may be omitted. Although some elements may be given multiple names, these names are merely illustrative, and are not intended to deny that other names may be given to these elements. Furthermore, this does not negate the use of other names for elements that are not given multiple names. Note that, in the following explanation, "connection" means not only direct connection but also connection through other elements.

Embodiments of the present invention will be described in detail below with reference to the accompanying drawings.

### [First Embodiment]

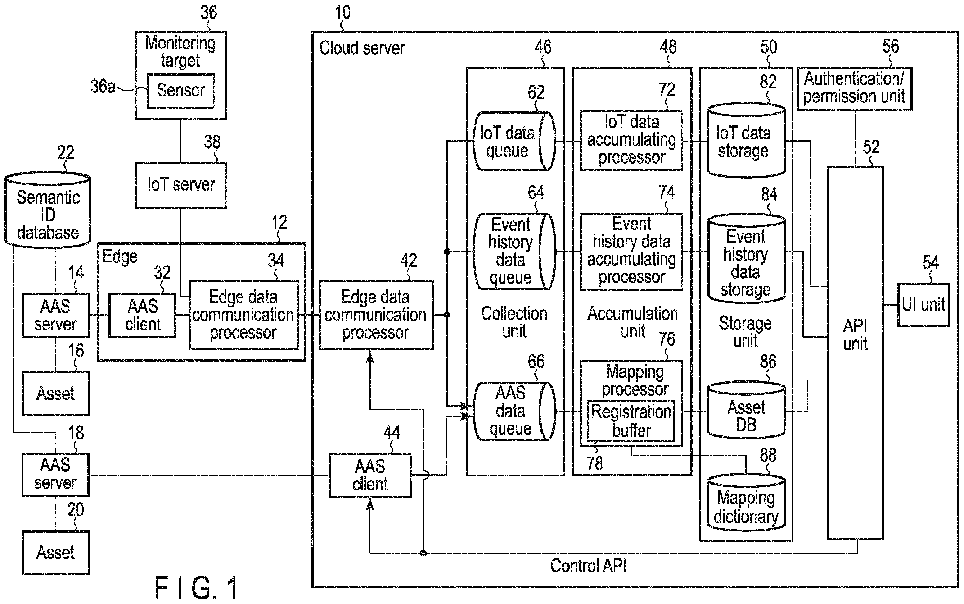

FIG. 1 shows an example of a remote control system applying a data collection system according to a first embodiment. The data collection system collects various data relating to a monitoring target. The remote control system controls the monitoring target or sends some instructions to an operator of the monitoring target based on the data collected by the data collection system. The data collection system is the remote control system with a part related to the control of the monitoring target removed from the remote control system. The remote control system includes a cloud server 10, an edge 12, asset administration shell servers (AAS servers) 14 and 18, assets 16 and 20, a semantic ID database (semantic ID DB) 22, a monitoring target 36, and an Internet of Things (IoT) server 38.

The assets 16 and 20 are defined in Industrie 4.0 as physical or logical objects owned or managed by an organization, Enterprise, or industry. The assets 16 and 20 are also monitored by the remote control system. An object is "thing" that has value to an organization, enterprise, or industry. "Thing" includes both material things, such as machinery, and immaterial things, such as documents. Examples of assets are at least one of the following: facilities, devices, products, materials, jigs, tools, software, systems, employees, factories, plants, production planning information, maintenance planning information, maintenance response information, specification information, and order information.

The AAS servers 14 and 18 generate AAS data that comprehensively manages all data relating to the assets 16 and 20 which are the monitoring targets.

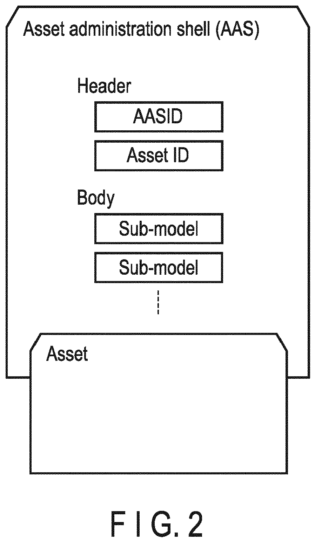

FIG. 2 shows an example of data representation of the AAS data generated by the AAS servers 14 and 18. The data representation in FIG. 2 shows an example of data representation according to an OLE for process control unified architecture (OPC UA) communication interface. The AAS data includes a header and a body. The AAS data is a digital representation of an asset. The AAS data is a communication interface that connects assets to the Internet-connected digital world.

The header includes an AAS ID (AASID) and an asset ID. An internationalized resource identifier (IRI) or a uniform resource identifier (URL) can be used for the AAS ID. An IRI can be used for the asset ID. The header has an interface to connect to an external network that exchanges information with other AAS data.

The body includes multiple data items (referred to as sub-models) at a first level. With multiple sub-models, the AAS data can describe various aspects of an asset (e.g., security, safety, energy efficiency, assembly capability). Information on one aspect can be combined to a single sub-model. The sub-models include a standardized common basic sub-model and free sub-models created and distributed for each industry or enterprise. Each sub-model includes a second level of multiple data items (referred to as sub-model elements). Examples of sub-model elements are properties (Prop) and sub-model element collections (SMC). A property includes any information relating to an asset, such as product characteristics, process variables, external links, asset capabilities, and a set of attributes. A property defines a characteristic that is suitable to represent or distinguish a product or component. An SMC includes properties. That is, properties include those directly included in the sub-model and those included in the SMC included in the sub-model. Properties included directly in the sub-model are data items of the second level. Properties included in the SMC are data items of a third level.

In addition to an ID, a semantic ID is set for the sub-model. The semantic ID of the sub-model is an ID of an external standardized dictionary corresponding to the meaning of a content expressed by the sub-model. An international registration data identifier (IRDI), the IRI, or the URI can be used for the semantic ID.

In addition to an idShort, a semantic ID is also set for the sub-model elements (properties). The idShort is a property identifier. The property identifier is referred to as the idShort to distinguish it from the sub-model ID. The semantic ID of a sub-model element also represents the meaning of a content expressed by the sub-model element. The semantic ID of a sub-model element is linked to an ID of a Concept Description. The IRDI, IRI, or URI can also be used for the semantic ID of a sub-model element.

The AAS servers 14 and 18 set semantic IDs to data items in the AAS data by referring to the semantic ID DB 22 (details are described below). The semantic ID DB 22 stores information indicating the correspondence relationship between data items and semantic IDs.

For simplicity of explanation, the number of AAS servers 14 and 18 and assets 16 and 20 is described as two, but the number of them is not limited to two. The data collection system can include many AAS servers and many assets. Although one asset is connected to one AAS server, multiple assets may be connected to one AAS server. For example, in a case where data indicating the operating status of an asset is to be included in the AAS data, the assets 16 and 20 include sensors.

A use case of the AAS data will be described. Here, the AAS data in a production system will be described. Multiple AAS data are generated at each phase of the production system, respectively. In a design phase, the AAS server generates AAS data including product specifications and drawing manuals generated by a manufacturer's design department when designing facilities. In a procurement phase, the AAS server generates AAS data including parts information and contract information generated when suppliers provide necessary parts. In a manufacturing phase, the AAS server generates AAS data including product configuration and quality information generated by a manufacturer's manufacturing department when producing facilities. In an installation phase, the AAS server generates AAS data including system specifications, installation information, and configuration information generated by an integrator when installing and operating production lines. The AAS data includes data relating to attributes and configurations of equipment and facilities. The data relating to attributes and configurations does not include time attributes. The AAS data includes operating status data. The operating status data represents events detected based on instantaneous values of measurement values related to assets measured by sensors or changes in the instantaneous values. The operating status data includes time attributes and is time-series data whose values change over time. The data relating to attributes and configurations of equipment and facilities is static data, while the time-series data is dynamic data. In a maintenance phase, the AAS server generates AAS data including inspection information and maintenance information generated by manufacturers and maintenance companies when performing system maintenance.

By using the AAS data, the remote control system can comprehensively connect all information relating to various facilities, equipment, and people from different manufacturers in a single method, and can link multiple applications that manage production systems.

Returning to the explanation in FIG. 1, AAS clients 32 and 44 transmit data acquisition requests to the AAS servers 14 and 18 respectively at regular intervals. When the AAS servers 14 and 18 receive the data acquisition requests from the AAS clients 32 and 44, they transmit AAS data related to the attributes and configurations of the asset, which is a snapshot of the data representation shown in FIG. 2 represented by a predetermined data format, to the ASS clients 32 and 44 at regular intervals. The AAS servers 14 and 18 may transmit the AAS data to the AAS clients 32 and 44 respectively, even without a data acquisition request from the AAS clients 32 and 44, if the value of the AAS data changes due to changes in the attributes and configurations of the assets 16 and 20. Examples of data formats include java script object notification (JSON), XML, and resource description framework (RDF). The AAS client 32 transmits the acquired AAS data to an edge data communication processor 34.

The AAS server 14 transmits the AAS data to the AAS client 32 according to an OLE for process control unified architecture (OPC UA) communication interface. The edge 12 includes the AAS client 32 and the edge data communication processor 34.

The AAS server 18 transmits the AAS data related to the attributes and configurations of the asset 20 to the AAS client 44 according to the OPC UA communication interface.

The monitoring target 36 is a remote control monitoring target other than the assets, and includes a sensor 36a. The IoT server 38 acquires various data relating to the monitoring target 36 and transmits the acquired data to the edge data communication processor 34.

The various data includes sensing data of the sensor 36a (referred to as IoT data) and event history data. The IoT data is data indicating the operating status (temperature, voltage value, etc.) and detection time of the monitoring target 36 detected by the sensor 36a. The event history data is data indicating what time and how the monitoring target 36 has changed and specifically what of the monitoring target 36 has changed. The remote control system monitors whether the monitoring target 36 is operating normally or not. In a case where the operation of the monitoring target 36 is normal, the IoT data output from the sensor 36a is within an acceptable range. When the operation of the monitoring target 36 becomes abnormal, the IoT data output from the sensor 36a exceeds the acceptable range. The IoT server 38 determines whether the monitoring target 36 is operating normally or not based on whether the IoT data is within the acceptable range or not, detects the occurrence of an event where the IoT data exceeds the acceptable range, and generates event history data.

The edge data communication processor 34 transmits the data acquisition request to the IoT server 38 at regular intervals. The IoT server 38 transmits the IoT data to the edge data communication processor 34 at regular intervals in response to the data acquisition request from the edge data communication processor 34. The IoT server 38 may transmit the IoT data to the edge data communication processor 34 when the value of the IoT data changes even without a data acquisition request from the edge data communication processor 34. The IoT server 38 transmits event history data generated at the time of event detection to the edge data communication processor 34 regardless of the data acquisition request from the edge data communication processor 34.

The edge data communication processor 34 transmits the edge data to the cloud server 10 according to advanced message queuing protocol (AMQP) and message queuing telemetry transport (MQTT) communication interfaces. The edge data includes the AAS data related to the attributes and configurations of the asset 16 that the AAS client 32 has acquired from the AAS server 14, and the IoT data and event history data of the monitoring target 36 that the edge data communication processor 34 has acquired from the IoT server 38.

The AAS data related to the attributes and configurations of the assets received by the cloud server 10 includes those transmitted from the AAS server 18 to the AAS client 44 and those transmitted from the AAS server 14 to an edge data communication processor 42 via the edge 12.

The cloud server 10 includes the edge data communication processor 42, the AAS client 44, a collection unit 46, an accumulation unit 48, a storage unit 50, an application program interface (API) unit 52, a user interface (UI) unit 54, and an authentication/permission unit 56.

The edge data communication processor 42 receives the edge data transmitted from the edge 12 according to the AMQP communication interface. The AAS client 44 receives data transmitted from the AAS server 18 according to the OPC UA communication interface. The edge data communication processor 42 transmits the received edge data to the collection unit 46. The collection unit 46 includes an IoT data queue 62, an event history data queue 64, and an AAS data queue 66. The edge data communication processor 42 transmits the IoT data in the edge data to the IoT data queue 62, the event history data in the edge data to the event history data queue 64, and the AAS data in the edge data to the AAS data queue 66. The AAS client 44 transmits the received AAS data to the AAS data queue 66.

The accumulating unit 48 includes an IoT data accumulating processor 72, an event history data accumulating processor 74, and a mapping processor 76. The storage unit 50 includes an IoT data storage 82, an event history data storage 84, an asset database (asset DB) 86, and a mapping dictionary 88.

The IoT data accumulating processor 72 reads the IoT data from the IoT data queue 62 and writes the read IoT data to the IoT data storage 82. The event history data accumulating processor 74 reads the event history data from the event history data queue 64 and writes the read event history data to the event history data storage 84. The IoT data and the event history data are data with attribute information relating to time. The IoT data storage 82 and the event history data storage 84 are configured to store time-series data. The IoT data accumulating processor 72 writes the IoT data as time-series data to the IoT data storage 82. The event history data accumulating processor 74 writes the event history data as time-series data to the event history data storage 84.

The mapping processor 76 reads the AAS data from the AAS data queue 66 and writes the read AAS data to the asset DB 86 according to mapping information read from the mapping dictionary 88. The mapping processor 76 includes a registration buffer 78. The registration buffer 78 is created in a memory built in the mapping processor 76.

The asset DB 86 is a relational database formed of many tables. The relational database is also referred to as a structured database. Each table includes multiple rows (records) and multiple columns (columns). In a case where two tables include the same column, the fields of the same column in the two tables are associated by a foreign key.

The mapping dictionary 88 stores mapping information indicating each data item of the AAS data is written to which column of which table in the asset DB 86. Since a unique semantic ID is set for each data item of the AAS data, the mapping dictionary 88 stores mapping information indicating each data item of the AAS data is written to which column of which table in the asset DB 86 for each semantic ID. The mapping information includes mapping information in units of properties, group mapping information in units of sub-models or SMCs, and mapping information in units of entities indicating the parent-child relationship of AAS. Entities are data indicating references to other AAS or assets.

The API unit 52 stores APIs that realize various functions related to data collection and remote control. A user operates the UI unit 54 to execute one of the APIs stored in the API unit 52. For example, in a case where the asset is detected as operating abnormally based on the event history information, the API may transmit an inquiry e-mail to the asset or transmit an e-mail requesting the dispatch of maintenance personnel to a maintenance and inspection enterprise.

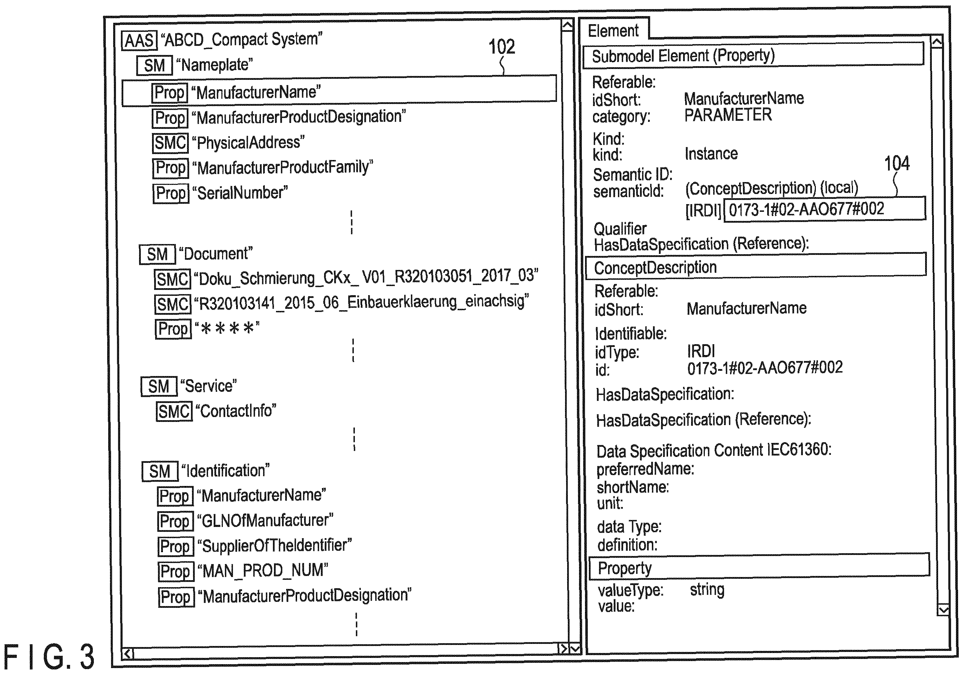

FIG. 3 shows an example of a data structure of the AAS data. FIG. 3 represents a unified data structure common to AAS data in various semi-structured data formats such as JSON and XML. On the left side of FIG. 3, AAS data "ABCD_Compact System" includes four sub-models, namely, sub-model "Nameplate", sub-model "Document", sub-model "Service", and sub-model "Identification".

Each sub-model includes multiple sub-model elements. The sub-model "Nameplate" includes a sub-model element "Prop" and a sub-model element "SMC". The sub-model "Document" includes the sub-model element "SMC". The sub-model element "SMC" includes the sub-model element "Prop". The sub-model "Document" manages data in PDF documents such as operation manuals. The sub-model "Service" includes the sub-model element "SMC". The sub-model "Identification" includes the sub-model element "Prop".

The right side of FIG. 3 shows an example of a data structure of a sub-model element "Prop" (ManufacturerName) 102 of the sub-model "Nameplate" currently selected in the mapping process. The sub-model element "Prop" includes a semantic ID 104. The value of the semantic ID 104 is "0173-1#02-AAO677#002".

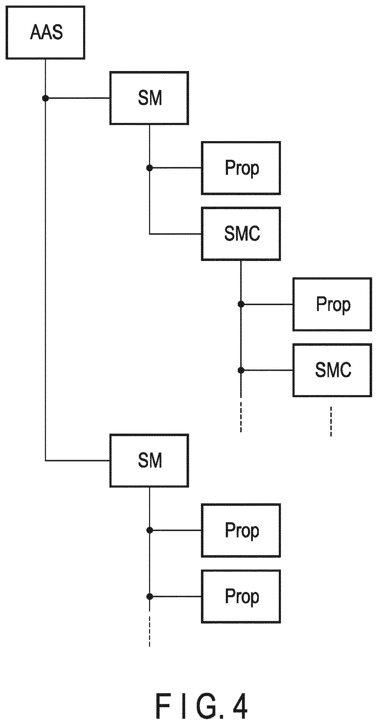

FIG. 4 shows another example of the data structure of the AAS data. The AAS data includes a singular/multiple sub-model SM. The sub-model SM may include a singular/multiple property (Prop) and a singular/multiple sub-model element collection (SMC), may include no sub-model element collections (SMC) and only the singular/multiple properties (Prop), or may include no properties (Prop) and include the singular/multiple sub-model element collections (SMC). The sub-model element collection (SMC) may include the singular/multiple property (Prop) and the singular/multiple sub-model element collection (SMC). The property (Prop) may include the singular/multiple property (Prop) and the singular/multiple sub-model element collection (SMC). Thus, the sub-model SM may include multiple levels of sub-model element collections (SMC)/properties (Prop).

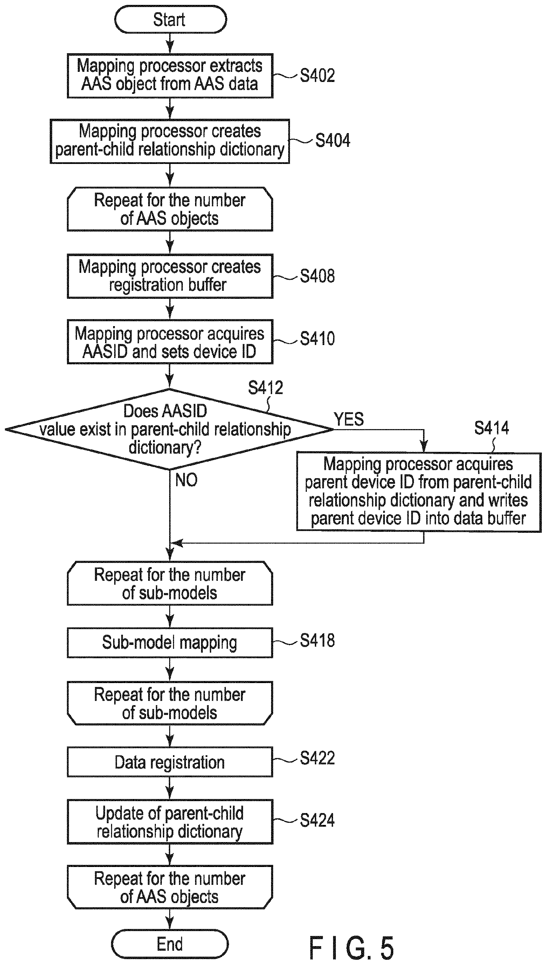

FIG. 5 is a flowchart showing an example of processing of the mapping processor 76.

The AAS data can include data related to multiple AASs. Data related to one AAS is referred to as an AAS object.

Upon acquiring the AAS data from the AAS data queue 66, the mapping processor 76 extracts the AAS object from the AAS data in S402.

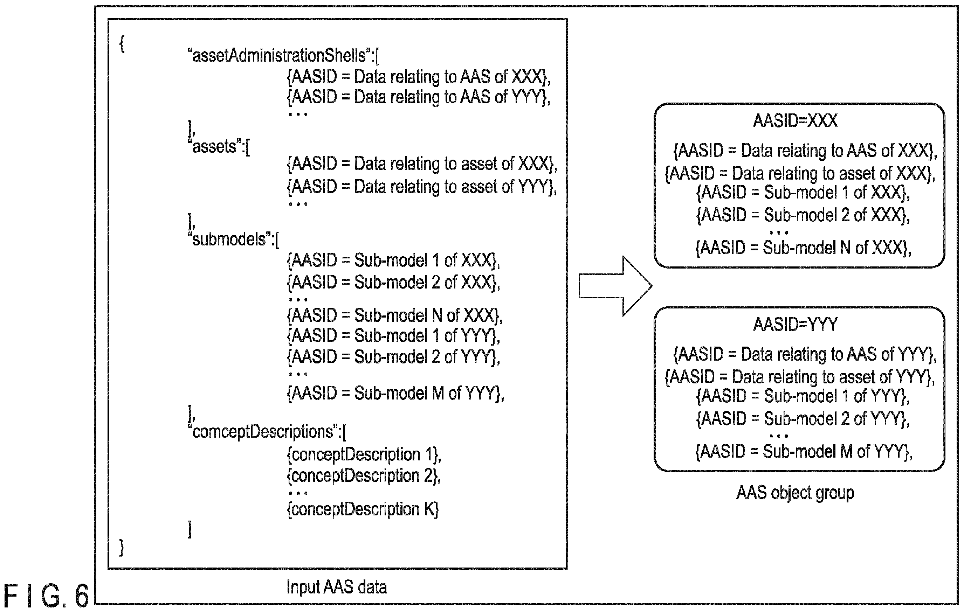

FIG. 6 shows an example of the input AAS data and a group of extracted AAS objects (data in JSON format). The AAS data includes an object related to AAS of AASID (= XXX) and an object related to AAS of AASID (= YYY). The object related to AAS of AASID (= XXX) includes data related to AAS of AASID (= XXX), data related to an asset of AASID (= XXX), a sub-model 1 of AASID (= XXX), a sub-model 2 of AASID (= XXX) ... and a sub-model N of AASID (= XXX). The object related to AAS of AASID (= YYY) includes data related to AAS of AASID (= YYY), data related to an asset of AASID (= YYY), a sub-model 1 of AASID (= YYY), a sub-model 2 of AASID (= YYY) ... and a sub-model N of AASID (= YYY).

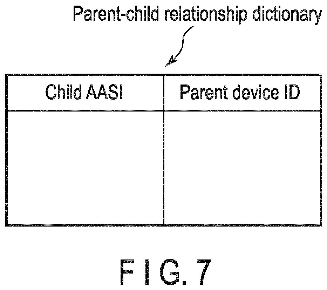

The mapping processor 76 creates a parent-child relationship dictionary in S404. The parent-child relationship dictionary is a dictionary for retrieving a parent device ID from a child AASID. FIG. 7 shows an example of the parent-child relationship dictionary.

In S408, the mapping processor 76 creates the registration buffer 78 corresponding to a table of a mapping destination of the data acquired from the currently acquired AAS object according to the mapping information.

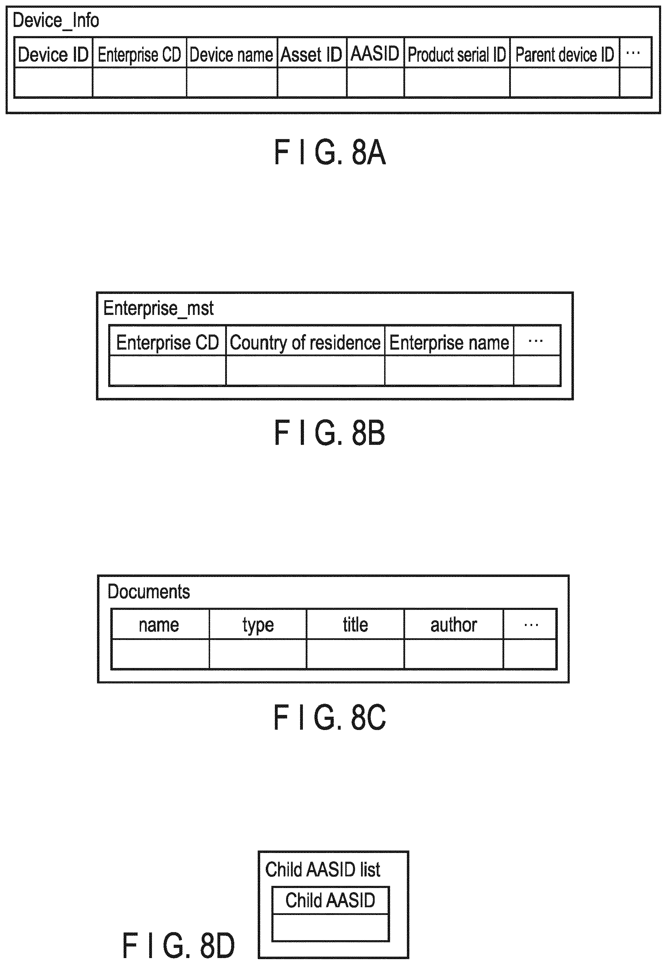

FIG. 8A to FIG. 8D show examples of the registration buffer 78.

FIG. 8A shows a device table "Device_Info" as the registration buffer 78 that stores information relating to the device (asset). The device table "Device_Info" includes columns for device ID, Enterprise CD (also referred to as Enterprise ID), device name, asset ID, AASID, product serial ID, parent device ID, etc.

FIG. 8B shows an enterprise master table "Enterprise_mst" as the registration buffer 78. The enterprise master table "Enterprise_mst" includes columns for enterprise CD, country of residence, enterprise name, etc.

FIG. 8C shows a document table "Documents" as the registration buffer 78. The document table "Documents" includes columns for name (document name), type (document type), title, author, etc.

FIG. 8D shows the child AASID list as the registration buffer 78.

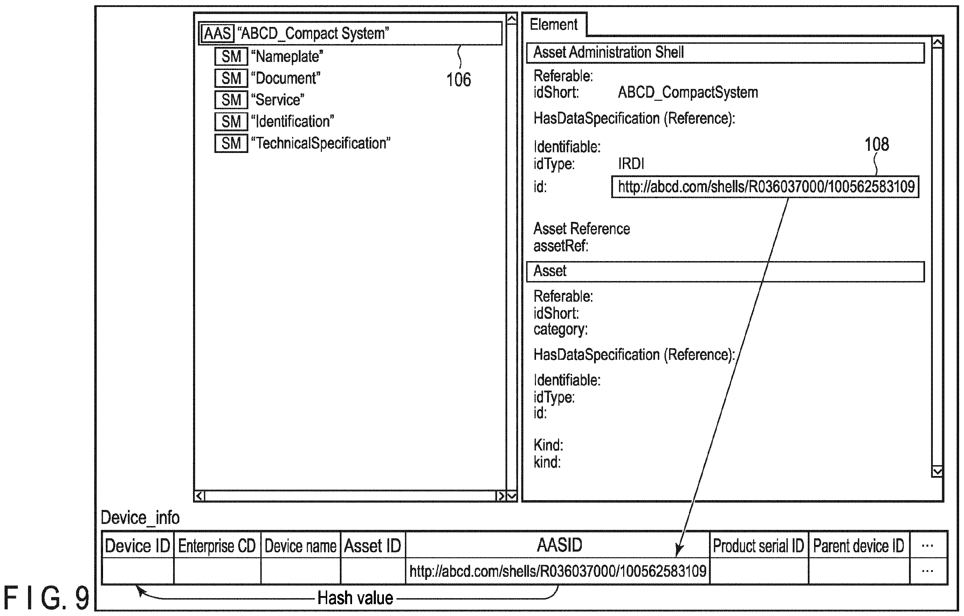

Returning to the explanation in FIG. 5, at S410, the mapping processor 76 acquires the AASID from the AAS object currently acquired and sets the AASID in the device table "Device_Info" in the registration buffer 78. In addition, the mapping processor 76 generates a device ID from the AASID according to a default method and sets the device ID in the device table "Device_Info" in the registration buffer 78. The default method is, for example, to use a hash value of the AASID as the device ID. FIG. 9 shows an example of the AASID acquisition (S410) process. On the left side of FIG. 9, AAS data "ABCD_Compact System" 106 includes five sub-models, namely sub-model "Nameplate", sub-model "Document", sub-model "Service", sub-model "Identification", and sub-model "TechnicalSpecification". FIG. 3 shows the sub-model elements of each sub-model, while FIG. 9 omits illustration of the sub-model elements of each sub-model.

The right side of FIG. 9 shows an example of a data structure of the currently selected AAS data "ABCD_Compact System "106. The AAS data "ABCD_Compact System" includes AASID 108. The type of AASID 108 is IRDI, and the value of the ID is a URL (http://abcd.com/shells/...). The mapping processor 76 writes the AASID 108 to the AASID column of the device table "Device_Info". In addition, the mapping processor 76 takes the hash value of the AASID 108 and writes it as the device ID in the device ID column of the device table "Device_Info".

At S412, the mapping processor 76 determines whether or not the acquired AASID value exists in the column of the child AASID in the parent-child relationship dictionary (FIG. 7).

If it exists, at S414, the mapping processor 76 acquires a parent device ID from the parent-child relationship dictionary and writes the obtained parent device ID to the column of the parent device ID in the device table "Device_Info" (FIG. 8A) in the registration buffer 78.

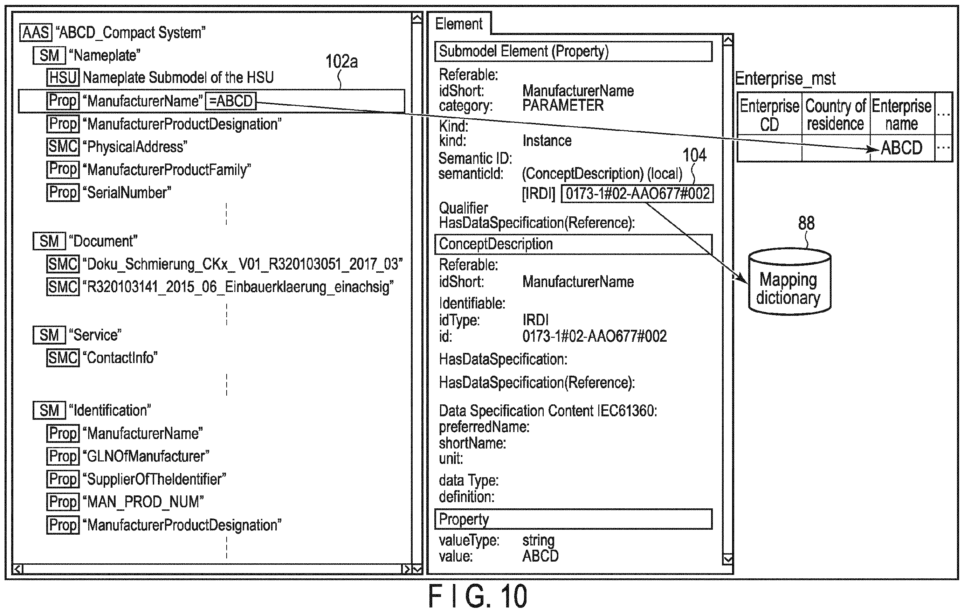

If it does not exist, or after the processing of S414, at S418, the mapping processor 76 writes the data of each sub-model element of the sub-model to the registration buffer 78 (sub-model mapping) according to the definition in the mapping dictionary 88. The details of sub-model mapping (S418) are described below with reference to FIG. 10 to FIG. 12.

The mapping processor 76 repeats sub-model mapping (S418) for the number of sub-models included in the AAS object.

The sub-model mapping is to write AAS data (semi-structured data) to the column of the registration buffer 78 corresponding to the semantic ID assigned to the sub-model or sub-model element.

The sub-model mapping includes an example of mapping in property units, an example of mapping multiple properties collectively in units of sub-models or SMCs, and an example of mapping in units of entities indicating parent-child relationships of AAS.

FIG. 10 shows an example of mapping in property units. As in FIG. 3, on the left side of FIG. 10, the AAS data "ABCD_Compact System" is mapped to four sub-models, namely sub-model "Nameplate", sub-model "Document", sub-model "Service", and sub-model "Identification". However, FIG. 3 shows only the names of the sub-model elements and omits showing their values, while FIG. 10 shows the value "ABCD" for some sub-model element "Prop" (ManufacturerName) 102a.

The right side of FIG. 10 shows an example of a data structure of the currently selected sub-model element "Prop" (ManufacturerName). The sub-model element "Prop" (ManufacturerName) includes the semantic ID 104. The type of the semantic ID 104 is IRDI, and the value of the semantic ID 104 is "0173-1#02-AAO677#002".

The mapping dictionary 88 stores mapping information indicating that the value "0173-1#02-AAO677#002" of the semantic ID 104 means that the sub-model element "Prop" (ManufacturerName) is the "Enterprise name". Therefore, the mapping processor 76 writes the value "ABCD" of the sub-model element "Prop" (ManufacturerName) 102a in the sub-model "Nameplate" of the AAS data "ABCD_Compact System" to the column "Enterprise name" of the Enterprise master table "Enterprise_mst" (FIG. 8B).

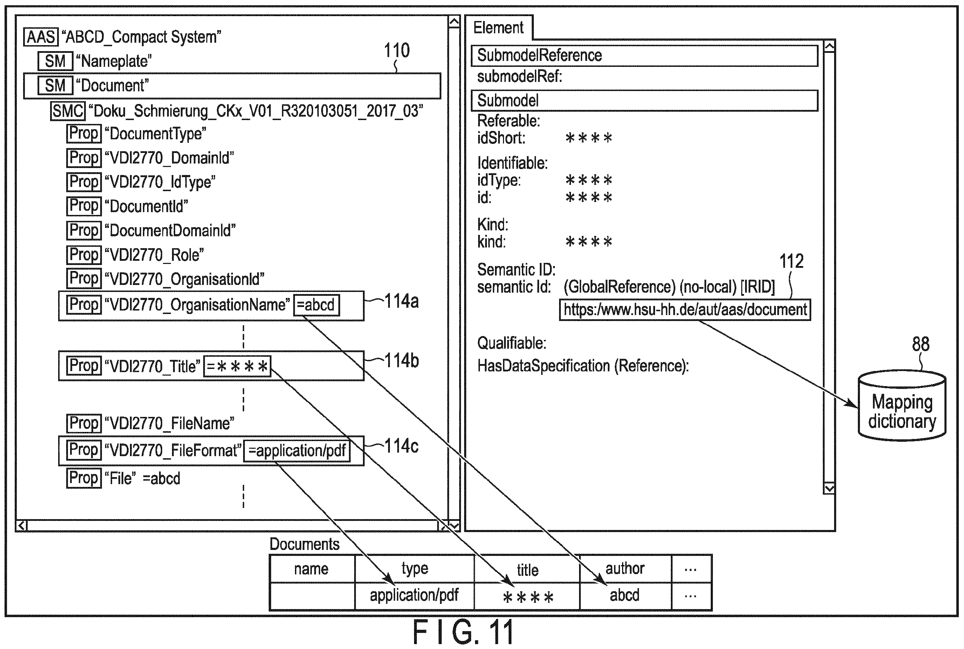

FIG. 11 shows an example of mapping multiple properties collectively in units of sub-models or SMCs. On the left side of FIG. 11, the AAS data "ABCD_Compact System" includes two sub-models, namely sub-model "Nameplate" and sub-model "Document" 110. The sub-model "Document" 110 includes a sub-model element collection SMC. The sub-model element collection SMC includes multiple sub-model elements "Prop".

The right side of FIG. 11 shows an example of a data structure of the sub-model "Document" 110. The sub-model "Document" includes a semantic ID 112. The value of the semantic ID 112 is URL "https: www.hsu-hh.de/...".

The mapping dictionary 88 stores mapping pattern information indicating that URL "https: www.hsu-hh.de/...2", which is a value of the semantic ID 104, means that a sub-model element "Prop" (VDI2770_OrganisationName) 114a of the sub-model "Document" is the "author", a sub-model element "Prop" (VDI2770_Title) 114b is the "title", and a sub-model element "Prop" (VDI2770_FileFormat) 114c is the "type". The mapping pattern information collectively indicates the meaning of multiple sub-model elements.

Therefore, the mapping processor 76 writes a value "abed" of the sub-model element "Prop" (VDI2770_OrganizationName) 114a of the sub-model "Document" to the author column of the document table "Document" (FIG. 8C), writes a value "****" of the "Prop" (VDI2770_Title) 114b to the "title" column of the document table "Document", and writes a value "application/pdf" of the sub-model element "Prop" (VDI2770_FileFormat) 114c to the "type" column of the document table "Document".

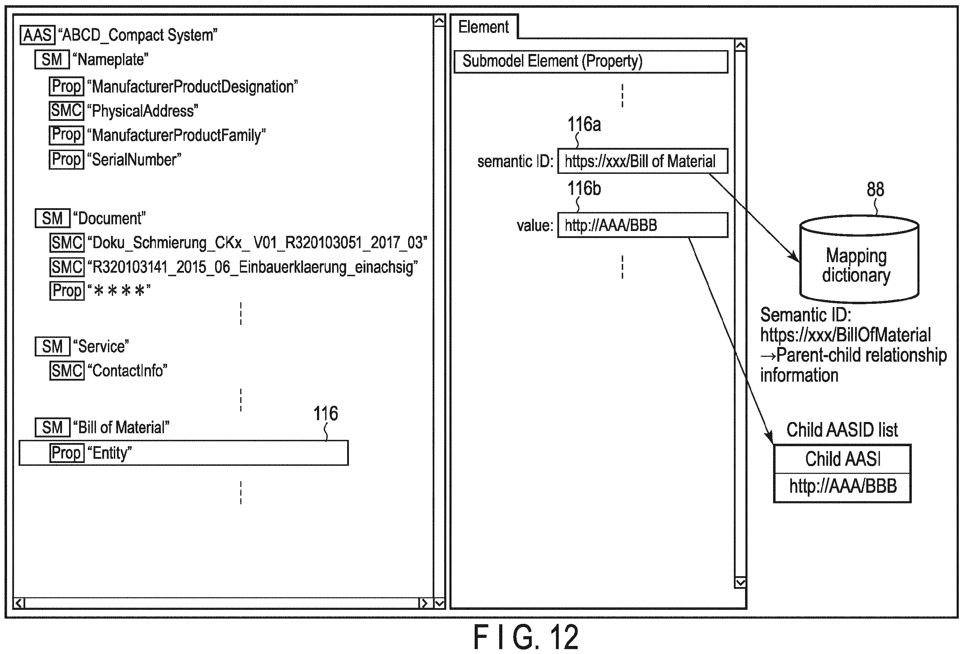

FIG. 12 shows an example of an entity mapping that indicates the parent-child relationship of AAS. A sub-model "Bill of Material" includes a property "Entity" 116. The Entity is data that indicates a reference to another AAS or asset. An example of the semantic ID and value of the entity 116 currently selected is a URL. The mapping dictionary 88 stores mapping information indicating that a semantic 116a "https://xxx/Bill of Material" means parent-child relationship information. Therefore, the mapping processor 76 adds a value "http://AAA/BBB" of an entity 116b indicating the parent-child relationship to the child AASID list.

Returning to the explanation in FIG. 5, when the mapping of data items included in all sub-models in the AAS object is completed, at S422, the mapping processor 76 writes the data in the registration buffer 78 to the record of a corresponding table in the asset DB 86 (data registration).

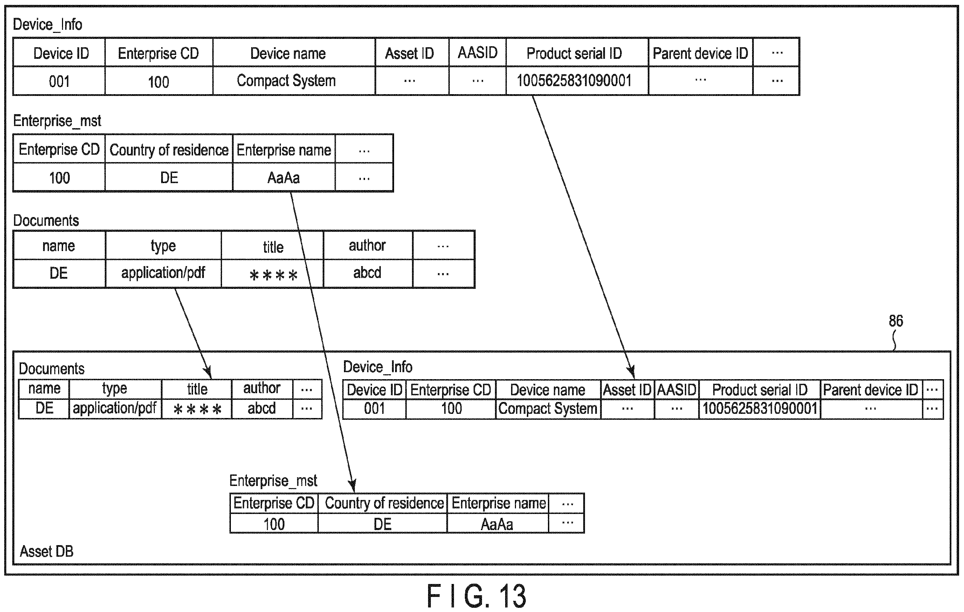

FIG. 13 shows an example of data registration to the asset DB 86. When registering data in the enterprise master table "Enterprise_mst" in the registration buffer 78, the mapping processor 76 checks whether a record with the same enterprise name (e.g., AaAa) exists in the enterprise master table "Enterprise_mst" in the asset DB 86. If the record does not exist, the mapping processor 76 determines a new enterprise CD (e.g., 100), generates a new record in the enterprise master table "Enterprise_mst" in the asset DB 86, and assigns the enterprise CD (100) to the enterprise CD column of the new record and the enterprise CD column of the device table "Device_Info". If the record exists, the mapping processor 76 sets the enterprise CD of the record with the same enterprise name in the enterprise master table "Enterprise_mst" to the enterprise CD column of the record and the enterprise CD column of the device table "Device_Info".

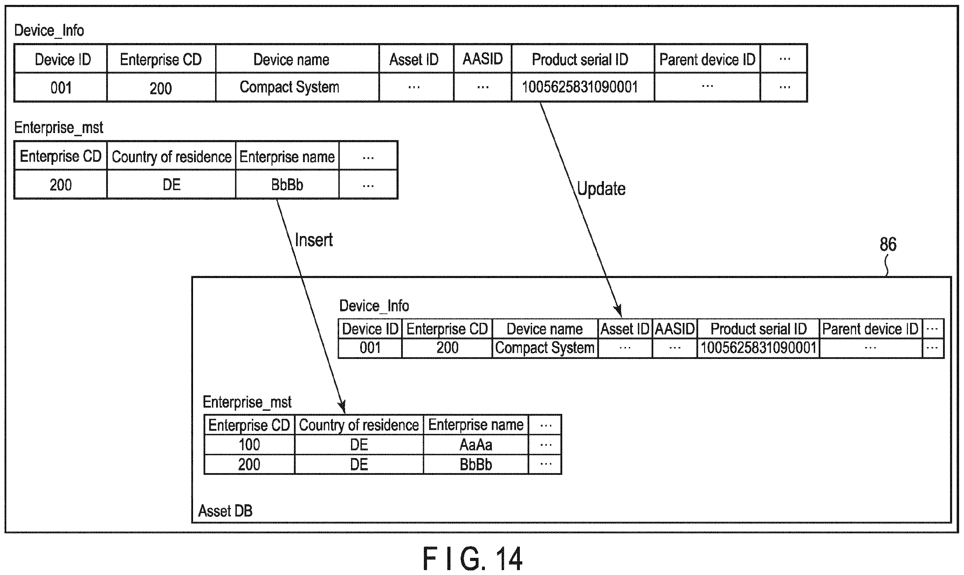

FIG. 14 shows another example of data registration to the asset DB 86. FIG. 14 shows a case in which the enterprise name of an AAS object is changed from "AaAa" to "BbBb". As shown in FIG. 13, in the enterprise master table "Enterprise_mst" in the asset DB 86, the enterprise name is "AaAa" and the enterprise CD is 100. In this situation, the enterprise name of the same AAS object is changed to "BbBb". Therefore, a record with an enterprise name of "BbBb" and an enterprise CD of 200 is added to the enterprise master table "Enterprise_mst" in the asset DB 86.

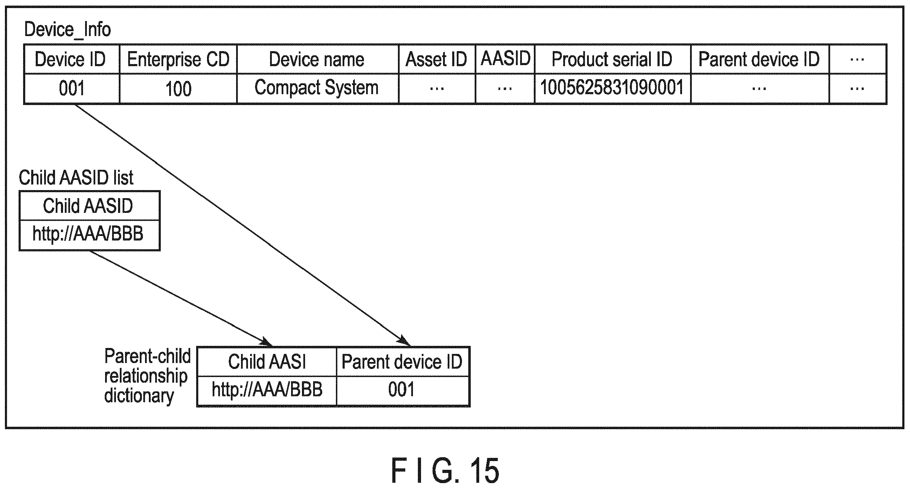

When the data registration is ended, in S424, the mapping processor 76 updates the parent-child relationship dictionary. FIG. 15 shows an example of updating the parent-child relationship dictionary.

As a result, data items of sub-model elements of AAS data, which are semi-structured data, are written to the columns of the corresponding tables in the asset DB 86, which is a structured database.

Note that, the document table "Documents" is not connected to other tables by foreign keys, so it can be a separate database from the asset DB 86.

The API unit 52 analyzes data stored in the IoT data storage 82, the event history data storage 84, and the asset DB 86. When the API unit 52 detects that the operation of the asset 16 or 20 or the monitoring target 36 is abnormal, it transmits a control API to the edge data communication processor 42 or the AAS client 44. The edge data communication processor 42 can control the operation of monitoring target 36 via the edge data communication processor 34 and the IoT server 38, or control the operation of the asset 16 via the AAS client 32 and the AAS server 14. The AAS client 44 can control the operation of the asset 20 via the AAS server 18.

As a result, the operations of the abnormally behaving assets 16 and 20 and the monitoring target 36 can be restored to normal. Alternatively, the edge data communication processor 42 transmits a notification of abnormal operation to the monitoring target 36 via the edge data communication processor 34 and the IoT server 38, or to the asset 16 via the AAS client 32 and the AAS server 14. The AAS client 44 can transmit a notification of abnormal behavior to the asset 20 via the AAS server 18. These notifications can be displayed on the display of a control panel of the asset 16 or 20 or the monitoring target 36, or can be transmitted to a smartphone or other device possessed by an operator of the asset 16 or 20 or the monitoring target 36.

The data collection system according to the embodiment collects AAS data and writes each data item of the AAS data to a corresponding column of a table in the asset DB 86 having the meaning represented by a semantic ID of the data item. In a case where the AAS data is not utilized, in order to comprehensively collect data of control targets of a wide variety of devices and equipment, etc., from various manufacturers, data had to be collected individually based on the specifications of each manufacturer, or the management information of the control targets had to be set individually, which involved a lot of time and effort. However, the remote control system to which the data collection system according to the embodiment is applied can comprehensively collect the operating statuses of the control targets such as facilities and equipment of various manufacturers installed in factories and plants. Therefore, the remote control system can collect the operating status of the control target in real time and achieve optimal operation and maintenance work efficiency according to the operating status.

### [Second Embodiment]

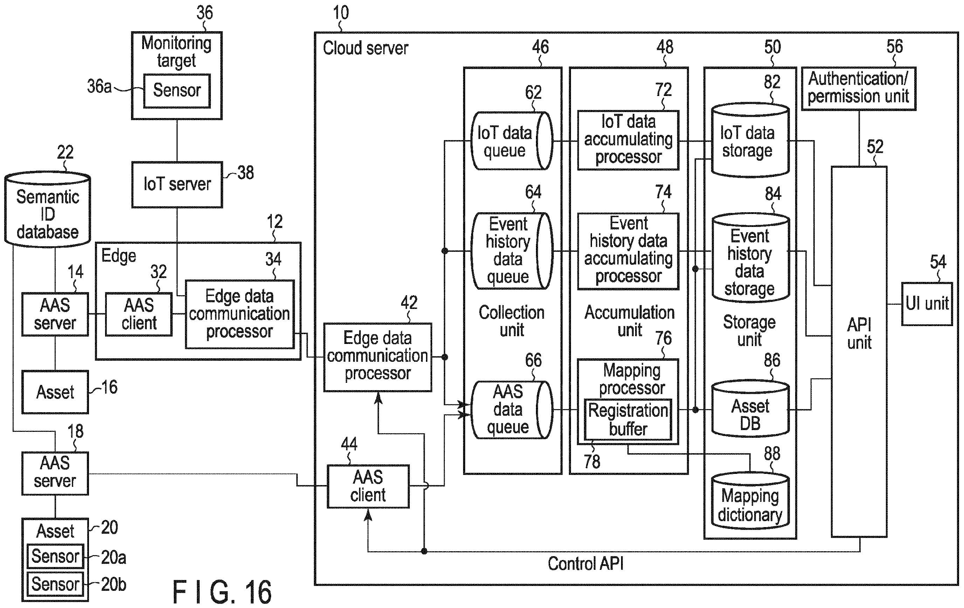

FIG. 16 shows an example of a remote control system applying a data collection system according to a second embodiment. In the second embodiment, the same configuration as in the first embodiment is shown with the same reference numerals, and detailed explanations are omitted.

The asset 20 includes sensors 20a and 20b. In the same manner as the sensor 36a of the monitoring target 36, the sensors 20a and 20b measure various data relating to the asset 20. The AAS server 18 stores IoT data measured by the sensors 20a and 20b as well as AAS data related to attributes and configurations of the asset 20.

The AAS client 44 transmits a data acquisition request to the AAS server 18 at regular intervals. The AAS server 18, upon receiving the data acquisition request from the AAS client 44, transmits first AAS data relating to the attributes and configurations of the asset 20 and second AAS data including the IoT data measured by the sensors 20a and 20b to the AAS client 44 at regular intervals. The AAS server 18 may transmit the first AAS data or the second AAS data to the AAS client 32 in a case where the value of the first AAS data or the second AAS data changes, even without a data acquisition request from the AAS client 44. The AAS server 18 determines whether or not the IoT data is within an acceptable range, and, in a case where the IoT data exceeds the acceptable range, detects the occurrence of an event, and transmits third AAS data including the occurrence time of the event and event history data indicating the type of event to the AAS client 44.

Thus, the AAS data received by the AAS client 44 includes the IoT data and the event history data in addition to the data related to attributes and configurations.

The AAS client 44 transmits the AAS data to the AAS data queue 66. The mapping processor 76 writes the AAS data stored in the AAS data queue 66 to the storage unit 50. The mapping processor 76 is connected to the asset DB 86, the IoT data storage 82, and the event history data storage 84. Based on mapping information stored in the mapping dictionary 88, the mapping processor 76 writes the first AAS data related to the attributes and configurations of the asset to the asset DB 86, the second AAS data including the IoT data to the IoT data storage 82, and the third AAS data including the event history data to the event history storage 84. Thus, the mapping destination of the mapping processor 76 is not limited to the asset DB 86, but also includes the IoT data storage 82 and the event history data storage 84.

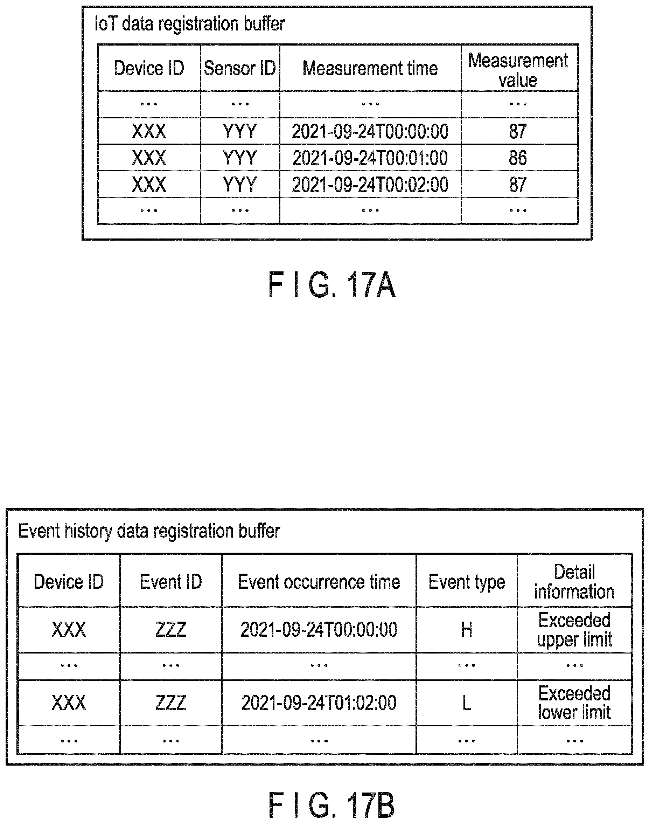

The registration buffer 78 includes registration buffers shown in FIG. 17A and FIG. 17B in addition to the registration buffers of the first embodiment (FIG. 8A to FIG. 8D). FIG. 17A shows an example of an IoT data registration buffer for the second AAS data including the IoT data. FIG. 17B shows an example of an event history data registration buffer for the third AAS data including the event history data.

The IoT data registration buffer (FIG. 17A) includes the device ID, a sensor ID, a measurement time, and a measurement value, and records the measurement time and the measurement value for a pair of the device ID and the sensor ID.

The device ID is identification information of the monitoring target 36 or the asset 16 or 20. The sensor ID is identification information of a plurality of sensors in the monitoring target 36 or the asset 16 or 20. In the present embodiment, the sensor ID is unique for each device ID. Hence, the combination of the device ID and the sensor ID identifies one sensor in the system. For example, in a case where a device with device ID = XXX has a sensor with sensor ID = sensor0, a device with device ID = YYYY can also have a sensor with sensor ID = sensor0. In a case where a single sensor is installed in the monitoring target 36 or the asset 16 or 20, the sensor ID and the device ID may be equal.

Note that the type of identifier used to identify the sensor depends on the design of the system. In the present embodiment, the sensors are considered to be associated with the devices, and are identified with the device ID and the sensor ID. In this case, the device ID is unique for the entire system, but the sensor ID only needs to be unique for the device ID of the device to which the corresponding sensor is attached. Thus, when a device with device ID = XXX has a sensor with sensor ID = sensor0, as described above, a device with device ID = YYY can also have a sensor with sensor ID = sensor0. In addition to the present embodiment, a system can be considered in which sensors registered in a sensor master (described below) are identified by each sensor being given a sensor ID that is unique in the entire system.

The measurement time is expressed in a format that follows the ISO8601 extension method. The ISO8601 extension method is expressed by year = YYYY (Gregorian calendar), month = MM, day = DD, hour = hh, minute = mm, and second = ss. Note that, in a case where there is a time difference from the Coordinated Universal Time (UTC), the time difference is added at the end. The IoT data in FIG. 17A indicates that the data was acquired every minute.

The sensor ID that is written to the IoT data registration buffer and a definition associated thereto (unit of a sensor measurement value, etc.) are stored in the asset DB 86 as a sensor master.

The event history data registration buffer (FIG. 17B) includes the device ID, the event ID, an event occurrence time, an event type, and detailed information. The device ID is the identification information of the monitoring target 36 or the asset 16 or 20. The event ID is the identification information of the event. The event occurrence time is also expressed in a format that follows the ISO8601 extension method.

The event ID that is written to the event history data registration buffer and a definition associated thereto (meaning of the event corresponding to the event ID and the type of event that occurs) are stored in the asset DB 86 as an event master.

The mapping processor 76 is connected to the IoT data storage 82, the event history data storage 84, and the asset DB 86.

Other configurations of the second embodiment are the same as those of the first embodiment.

The operation of the mapping processor 76 according to the second embodiment differs from that of the mapping processor 76 according to the first embodiment shown in FIG. 5 in two steps: sub-model mapping (S418) and data registration (S422).

An example of the asset 20 is a transport system driven by a motor. An example of the sensor 20a is an ammeter that measures the current flowing in the motor. The asset 20 includes only the sensor 20a and does not include the sensor 20b. The name of equipment in the asset 20 is "ABCD_CompactSystem", and the ID of the ammeter is "Sensor1".

In the sub-model mapping according to the second embodiment corresponding to S418 shown in FIG. 5, the mapping processor 76 writes the data of each sub-model element of the AAS data sub-model to the registration buffer of the first embodiment shown in FIG. 8A to FIG. 8D, the IoT data registration buffer shown in FIG. 17A, or the event history data registration buffer shown in FIG. 17B according to the definition in the mapping dictionary 88.

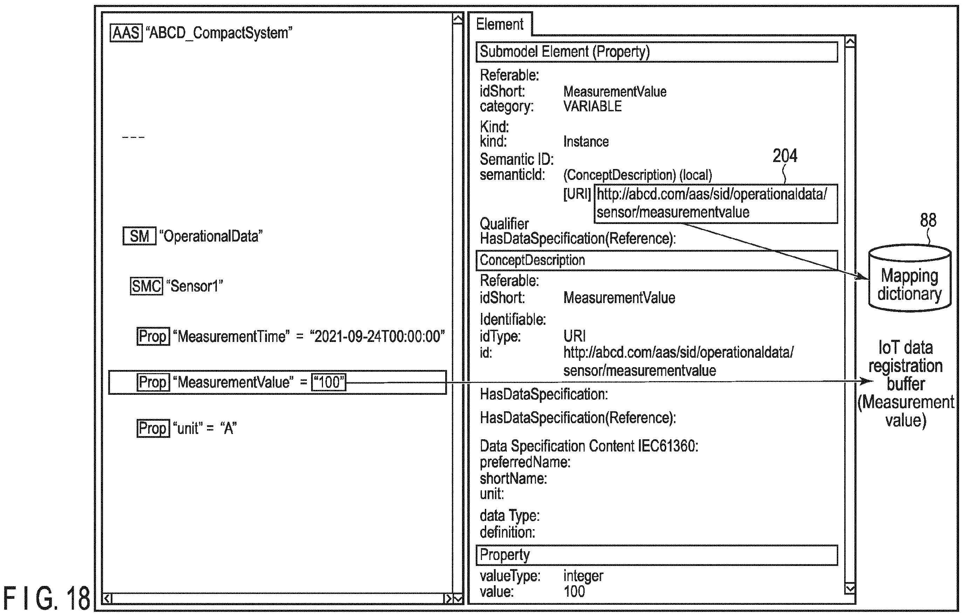

FIG. 18 shows an example of the second AAS data including the IoT data from the sensor 20a acquired by the AAS client 44. A sub-model SM "OperationalData" of the second AAS data "ABCD_CompactSystem" includes a sub-model element SMC "Sensor1" (the sensor ID of the sensor 20a), a sub-model element Prop "MeasurementTime" (the measurement time of the sensor 20a = 2021-09-24T00:00:00), a sub-model element Prop "MeasurementValue" (the measurement value = 100), and a sub-model element Prop "unit" (unit = A). The sensor ID, the measurement time, and the measurement value are retrieved from the data of the sub-model SM, the sub-model element SMC, and the sub-model element Prop of the second AAS data. The sensor ID, the measurement time, and the measurement value are stored in the IoT data registration buffer shown in FIG. 17A according to the definition in the mapping dictionary 88. Furthermore, through the AASID acquisition/device ID setting (S410) process, the device ID stored in the registration buffer shown in FIG. 8A is copied to the IoT data registration buffer shown in FIG. 17A.

The right side of FIG. 18 shows an example of a data structure of the currently selected sub-model element Prop "MeasurementValue". The sub-model element Prop "MeasurementValue" includes a semantic ID 204. The type of the semantic ID 204 is a URI. The value of the semantic ID 204 is URI "http://abcd.com/aas/sid/operationaldata/sensor/measure mentvalue".

The mapping dictionary 88 indicates that the value of the sub-model element Prop "MeasurementValue" with the semantic ID 204 is the measurement value of the sensor 20a identified by the sensor ID (Sensor1). Therefore, the mapping processor 76 writes the value (= 100) of the sub-model element Prop "MeasurementValue" of the AAS data "ABCD_CompactSystem" to a measurement value field specified by a pair of the device ID and the sensor ID of the IoT data registration buffer.

Similarly, the mapping processor 76 writes the value of the sub-model element Prop "MeasurementTime" (= 2021-09-24T00:00:00) of the AAS data "ABCD_CompactSystem" to a measurement time field specified by a pair of the device ID and the sensor ID of the IoT data registration buffer.

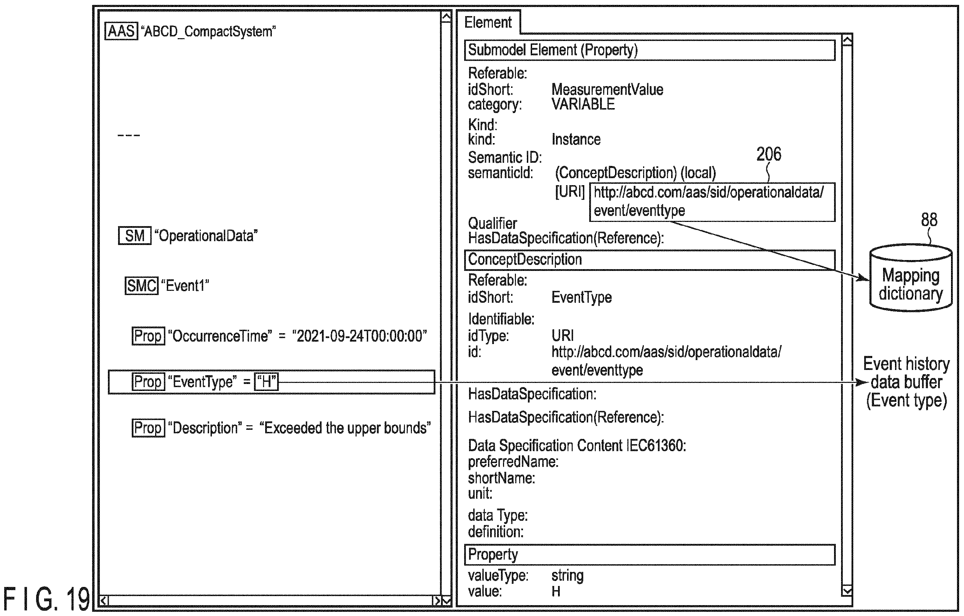

FIG. 19 shows an example of the third AAS data including the event history data acquired by the AAS client 44. A sub-model SM "OperationalData" of the third AAS data "ABCD_CompactSystem" includes a sub-model element SMC "Event1" (event ID), a sub-model element Prop "OccurrenceTime" (event occurrence time = 2021-09-24T00:00:00), a sub-model element Prop "EventType" (event type = H), and a sub-model element Prop "Description" (detailed information = Exceeded the upper limit). The event ID, the event occurrence time, the event type, and the detailed information are retrieved from the data of the sub-model SM, the sub-model element SMC, and the sub-model element Prop of the third AAS data. The event ID, the event occurrence time, the event type, and the detailed information are stored in the event history data registration buffer shown in FIG. 17B according to the definition of the mapping dictionary 88. Furthermore, by the AASID acquisition corresponding to S410 shown in FIG. 5, the device ID stored in the registration buffer shown in FIG. 8A is copied to the event history data registration buffer shown in FIG. 17B.

The right side of FIG. 19 shows an example of a data structure of the currently selected sub-model element Prop "EventType". The sub-model element Prop "EventType" includes a semantic ID 206. The type of the semantic ID 206 is a URI. The value of the semantic ID 206 is URI "http:///abcd.com/as/sid/operationaldata/event/eventtyp e" .

The mapping dictionary 88 indicates that the value of the sub-model element Prop "EventType" with the semantic ID 206 is the type of event identified by the event ID (Event1). Therefore, the mapping processor 76 writes the value (= H) of the sub-model element Prop "EventType" of the AAS data "ABCD_CompactSystem" to an event type field specified by a pair of the device ID and the sensor ID in the event history data registration buffer.

Similarly, the mapping processor 76 writes the value of the sub-model element Prop "OccurrenceTime" (= 2021-09-24T00:00:00) of the AAS data "ABCD_CompactSystem" to the event occurrence time field specified by a pair of the device ID and the sensor ID in the event history data registration buffer, and writes the text of the sub-model element Prop "Description" (= Exceeded the upper limit) to a detailed information field specified by a pair of the device ID and the sensor ID in the event history data registration buffer.

According to the data collection system of the second embodiment, the asset 20 includes the sensors 20a and 20b, and the AAS server 18 transmits the first AAS data related to the attributes and configurations of the asset, the second AAS data including the IoT data collected by the sensors 20a and 20b, and the third AAS data including the even history data to the AAS client 44. A semantic ID is set for each data item in the first, second, and third AAS data. The mapping dictionary 86 stores mapping information that sets the mapping destination of data items to the IoT data storage 82, the event history data storage 84, or the asset DB 86 for each semantic ID. The mapping processor 76 that receives the AAS data from the AAS client 44 writes each data item of the AAS data to the IoT data storage 82, the event history data storage 84, or the asset DB 86 according to the mapping information of its semantic ID.

The present invention is not limited to the embodiments described above but the constituent elements of the invention can be modified in various manners without departing from the spirit and scope of the invention. Various aspects of the invention can also be extracted from any appropriate combination of a plurality of constituent elements disclosed in the embodiments. Some constituent elements may be deleted in all of the constituent elements disclosed in the embodiments. The constituent elements described in different embodiments may be combined arbitrarily.

### Reference Signs List

10...cloud server, 12...edge, 14, 18...AAS server, 16, 20...asset, 66...AAS data queue, 76...mapping processor, 78...registration buffer, 86...asset DB, 88...mapping dictionary

## Claims

1. A data collection system comprising:
receiving means for receiving semi-structured data including first data of a first level and a plurality of second data of a second level, the first data including a plurality of the second data, wherein a plurality of second identification information are respectively set for a plurality of the second data;
a database;
information storage means for storing storage position information indicating storage positions of a plurality of the second identification information in the database; and
registration means for writing a plurality of the second data to the database based on the storage position information.

2. The data collection system of claim 1, wherein:
the database includes a second database including a plurality of tables;
first identification information is set for the first data;
the storage position information includes first information and second information, the first information indicating a correspondence relationship between the first identification information and at least two columns of a first table in a plurality of the tables, and the second information indicating a correspondence relationship between any of a plurality of the second identification information and a column of a second table in a plurality of the tables; and
the registration means writes at least two of a plurality of the second data included in the first data to at least two columns of the first table based on the first information, and writes the second data to a column of the second table based on the second information.

3. The data collection system of claim 2, wherein:
the second data includes data related to an asset;
the asset includes at least one of equipment, device, product, material, jig, tool, software, system, employee, factory, plant, production plan information, maintenance plan information; maintenance response information, specification information, or order information;
the first data includes a set of second data related to an aspect of the asset; and
the second data includes product characteristics, process variables, external links, capabilities of the asset, attributes of the asset, or operational status of the asset.

4. The data collection system of claim 3, wherein:
the receiving means receives an asset administration shell;
the asset administration shell includes a header and a body;
the header includes an asset identifier and an asset administration shell identifier; and
the body includes the first data.

5. The data collection system of claim 1, wherein:
the semi-structured data includes first semi-structured data related to a sensor;
the second data of the first semi-structured data includes a measurement value of the sensor, sensor identification information, and measurement time; and
the database includes a first time-series database storing time-series data of the measurement value for each sensor identification information.

6. The data collection system of claim 5, wherein
the storage position information indicates a correspondence relationship between the second identification information of the first semi-structured data and a storage position in the first time-series database.

7. The data collection system of claim 5, wherein:
the semi-structured data includes second semi-structured data related to a status change detected by the sensor;
the second data of the second semi-structured data includes identification information of the status change, a time of the status change, and a type of the status change; and
the database includes a second time-series database storing time-series data comprising the time of the status change and the type of the status change for each identification information of the status change.

8. The data collection system of claim 7, wherein
the status change includes an event in which the measurement value of the sensor exceeds an acceptable range.

9. The data collection system of claim 7, wherein
the storage position information indicates a correspondence relationship between the second identification information of the second semi-structured data and the storage position in the second time-series database.

10. A remote control system comprising:
receiving means for receiving semi-structured data including first data of a first level related to a plurality of control targets and a plurality of second data of a second level related to a plurality of the control targets, wherein a plurality of second identification information are respectively set for a plurality of the second data;
a database;
information storage means for storing a plurality of the second identification information and storage position information indicating storage positions of a plurality of the second identification information in the database;
registration means for writing a plurality of the second data to the database based on the storage position information; and
notification means for outputting information related to one of a plurality of the control targets based on the second data stored in the database.
